# EUROPEAN PATENT APPLICATION

(11) **EP 3 501 923 A1**
(43) Date of publication of application: **26.06.2019**
(21) Application number: 17425131.4
(22) Date of filing: 22.12.2017
(51) Int. Cl.: B60T 8/172, B60W 30/18, B60T 1/10

(54) **BRAKING MODE SELECTION SYSTEM IN A MOTOR VEHICLE**

(71) Applicant: FCA Italy S.p.A., 10135 Torino (IT)
(72) Inventor: Badino, Renato, 10135 Torino (IT); Lucà, Stefano, 10135 Torino (IT)
(74) Representative: Bosman, Cesare

(57) **Abstract**

A braking mode selection system **(ABMS)** in a motor vehicle **(MV)** has a friction braking system **(FBS),** a regenerative braking system **(RBS)** and an electronic control unit **(ECU),** which activates the friction braking assembly **(FBS)** and/or the regenerative braking assembly **(RBS)** depending on a base selection criterion, in response to a braking control; the electronic control unit **(ECU)** is configured to so as to determine the value of a quantity indicating the inactivity time of the friction braking system **(FBS),** compare this value with an intervention threshold, and activate the friction braking system **(FBS),** in response to a new braking control, when the determined value reaches the intervention threshold, regardless of the base selection criterion.

## Description

The invention relates to a braking mode selection system in a motor vehicle, in particular in a motor vehicle with hybrid drive.

As it is known, hybrid-drive motor vehicles are provided with two different drive systems, typically a thermal drive system and an electric drive system. Thermal drive systems normally comprise an internal combustion engine, which is preferably used to drive the front wheels, whereas electric drive systems usually comprise a three-phase electric machine, namely a so-called brushless machine, which is connected to a battery of the motor vehicle and is preferably used to drive the rear wheels.

Hybrid-drive vehicles are further provided with a braking system, which comprises a friction braking system and regenerative braking system.

The braking system usually comprises a hydraulic circuit and, for each wheel, a braking assembly, which typically consists of a disc brake, which is operated by oil under pressure supplied by means of the hydraulic circuit. The braking takes place due to the contact between a metal braking disc and a pair of braking pads, which are arranged on opposite sides of the disc and carried by a floating brake caliper. The pads usually consist of a metal base and of a layer of abradable material, for example a sintered material, with a high coefficient of friction on metal materials.

On the other hand, the regenerative braking system comprises an electric machine, conveniently the same one used for the electric drive of the motor vehicle. During a braking, such machine is controlled so as to work as a current generator in order to turn into electrical energy the kinetic energy of the wheels of the motor vehicle, which hence decelerates. The electrical energy generated in this way is then used to charge the battery of the motor vehicle.

The friction braking system and the regenerative braking system are generally activated in a coordinated or alternative manner by an electronic control unit, based on the driving conditions and on the braking set by the driver.

In particular, the electronic control unit is configured to activate the regenerative braking system when delicate and gradual braking actions need to be carried out, for example in non-critical conditions of city driving, and/or when the battery of the motor vehicle needs to be charged.

Vice versa, the friction braking system is activated by the electronic control unit when sudden braking actions need to be carried out, which are such as to cause relative fast decelerations of the motor vehicle.

The Applicant found out that, in case of exclusive and prolonged use of the regenerative braking system, for example when driving for a long time through city centres, the friction braking system slightly loses effectiveness, which means that it produces smaller braking forces compared to the ones that it would produce in standard conditions.

In particular, a decrease in the braking force leads to an increase in the space needed to stop the motor vehicle, starting from the same speed thereof.

This decrease is due to the fact that, as inactivity time of the friction braking system goes by, thin layers of oxide build up on the surfaces of the pads, for example because of atmospheric humidity, with consequent decrease in the coefficient of friction on the disc.

Even though an insistent use of the regenerative braking system is particularly convenient from the point of view of electrical energy recovery, it is not appropriate to ignore, on the other hand, the greater risks connected to the aforesaid loss of performances of the friction braking system.

Furthermore, the presence of oxide on the pads as well as atmospheric humidity could lead to an increase in the noise and vibrations produced during the braking.

Moreover, as braking spaces are perceived greater than the expected ones, the driver of the motor vehicle could feel forced to carry out excessively sudden braking actions, thus jeopardizing braking comfort.

The object of the present invention is to provide a braking mode selection system, which solves the problems discussed above in a simple and relatively low-cost manner, in particular a system which helps improve the braking performances of the motor vehicle, finding the best compromise between energy recovery and preservation of the effectiveness of the braking pads.

Hence, according to the present invention, there is provided a system to select the braking mode in a motor vehicle as set forth in claim 1.

The present invention will now be described with reference to the accompanying drawings, which show a non-limiting embodiment thereof, wherein:
- Figure 1 schematically shows a preferred embodiment of the system to select the braking mode in a motor vehicle according to the present invention; and
- Figure 2 schematically and partially shows a braking assembly of the motor vehicle of Figure 1.

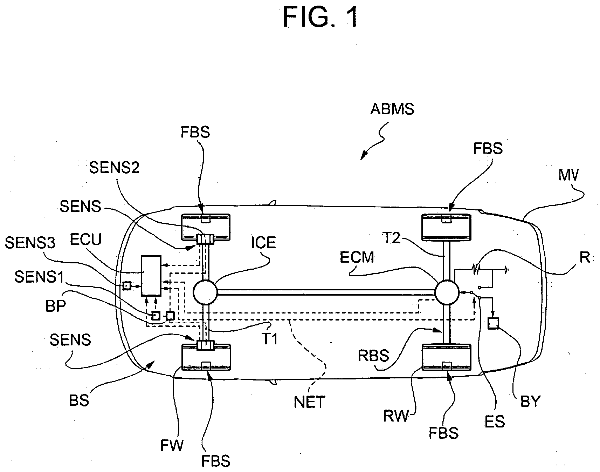

In Figure 1, the reference symbol **ABMS** indicates a braking mode selecting system to improve the braking performances of a motor vehicle **MV**, which comprises a pair of front wheels **FW**, a pair of rear wheels **RW**, a braking system **BS**, an internal combustion engine **ICE**, an electric machine **ECM**, an electric battery **BY**, and a control member **BP** to generate a braking control, for example a brake pedal.

In particular, the internal combustion engine **ICE** is coupled to the pair of front wheels **FW** by means of a front transmission **T1** so as to deliver power to the front wheels **FW**.

Similarly, the electric machine **ECM** is coupled to the rear wheels **RW** by means of a rear transmission **T2** and is electrically supplied with power by the batter **BY**, to work as an electric motor and deliver power to the rear wheels **RW**.

Therefore, according to the preferred embodiment shown herein, the motor vehicle **MV** is provided with a hybrid drive system of the so-called electric-thermal type. However, the present invention can also be applied to vehicles exclusively provided with an electric drive system.

Preferably, the electric machine **ECM** is a synchronous three-phase machine with permanent magnets. Alternatively, it is a brushless DC machine.

As an alternative to or in combination with what illustrated in the example shown herein, the electric machine **ECM** is coupled to the pair of front wheels **FW** and/or the internal combustion engine **ICE** is coupled to the pair of rear wheels **RW**.

According to a further alternative, which is not shown herein the wheels **FW**, **RW** are coupled to respective electric machines, which are distinct from one another.

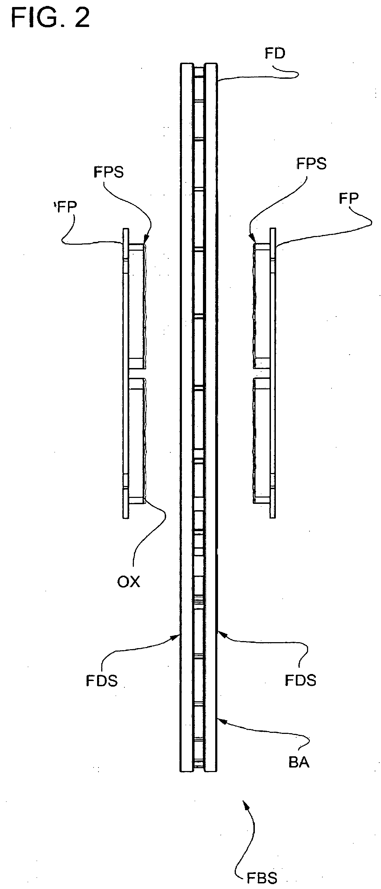

As schematically shown in Figure 1, the braking system **BS** comprises a friction braking system **FBS**, which comprises, in turn, a hydraulic operating circuit and, for each wheel **FW**, **RW**, a relative braking assembly, for example of the so-called disc type, indicated by the symbol **BA** in figure 2.

Each braking assembly **BA** is operated in a known manner, which is not described in detail, by means of the hydraulic operating circuit and, as schematically shown in Figure 2, it comprises a rotary element **FD**, which rotates with the corresponding wheel **FW**, **RW** in an integral manner and consists, for example of a disc or drum; and braking material blocks **FP** having respective surfaces **FPS**, which, during a braking action, come into contact with surfaces **FDS** of the element **FD**.

With reference - again - to figure 1, the braking system **BS** further comprises a regenerative braking system **RBS**, which is configured to turn the kinetic energy of the wheels **RW** into electrical energy. Preferably, said regenerative braking system **RBS** comprises the transmission **T2** and the electric machine **ECM**, which is controlled so as to operate as an electric current generator. Alternatively, the regenerative braking system **RBS** comprises at least one electric current generator, which is distinct from the electric machine **ECM**.

Therefore, the battery **BY** can be charged through the electric current generated by the regenerative braking system **RBS**, directing it towards the battery **BY**. Vice versa, when the battery **BY** is charged, the electric current usually is dissipated, for example directing it towards a resistor **R** instead of towards the battery **BY**.

Conveniently, the switching between the battery **BY** and the resistor **R** is carried out by means of a switch, which is indicated with the symbol **ES** in Figure 1.

In addition, the motor vehicle **MV** comprises a sensor system **SENS** and an electronic control unit **ECU**, which conveniently consists of the body computer of the motor vehicle **MV**. The electronic control unit **ECU** is connected to the sensor system **SENS** by means of an on-board communication network **NET**, for example a CAN network or the like, so as to receive and process the signal detected by the sensor system **SENS**.

In particular, the sensor system **SENS** comprises a first group of sensors **SENS1**, which are configured to detect quantities indicating the operating mode of the control member **BP** chosen by a driver of the motor vehicle **MV**. For example, in case the control organ **BP** is a brake pedal, these quantities can be the degree of pressure/force exerted upon the pedal and/or the speed with which the pedal is pressed and/or the position of the pedal.

The sensor system **SENS** also comprises a second group of sensors **SENS2**, which are configured to detect quantities indicating the state of motion of the motor vehicle **MV**. For example, these quantities comprise the steering angle, the speed and the acceleration of the motor vehicle **MV**.

Furthermore, advantageously, the sensor system **SENS** comprises a third group of sensors **SENS3** to detect the conditions on the outside of the motor vehicle **MV**, for example the presence of pedestrians and/or of other vehicles close to the motor vehicle **MV**.

The groups of sensors **SENS1** and **SENS3**, together with a program (software) implemented in the electronic control unit **ECU**, make up part of the braking mode selection system **ABMS**.

Thanks to this program, the electronic control unit **ECU** is configured to determine, based on the aforesaid signals, a value relating to a braking intensity or to a deceleration of the motor vehicle **MV**, both desired by the driver, when he/she operates the control member **BP** in order to generate a braking control; consequently, the group of sensors **SENS1** detects quantities indicating the operating mode and sends one or more signals defining the braking control to the electronic control unit **ECU**.

As an alternative or in combination with the operation of the control member **BP**, the electronic control unit **ECU** can control the braking system **BS** in an autonomous manner to brake the motor vehicle **MV** when it receives signals from the group of sensors **SENS3** indicating a danger or risk of collision, due for example to the presence of a vehicle standing still or of a pedestrian in front of the motor vehicle **MV**.

When the control member **BP** is operated, the electronic control unit **ECU** is further configured to select, depending on a predetermined base selection criterion, which one between the friction braking system **FBS** and the regenerative braking system **RBS** has to be activated.

In particular, the electronic control unit **ECU** selects the regenerative braking system **RBS** when, in response to the braking control, the desired deceleration value is smaller than or equal to a predetermined threshold, which is stored in the electronic control unit **ECU**. Preferably, said predetermined threshold is equal to 0.3 g (wherein g indicates the modulus of the Earth's gravitational acceleration).

At the same time, the electronic control unit **ECU** selects the friction braking system **FBS** when the desired deceleration value is greater than the predetermined threshold.

The base selection criterion could be different from the one described above, for example it could take into account the quantities detected by the group of sensors **SENS2** (in particular, the speed of the motor vehicle **MV**) and/or involve, in particular driving conditions, the joined activation of the regenerative braking system **RBS** and of the friction braking system **FBS.**

According to an aspect of the present invention, the electronic control unit **ECU** is configured to determine the value of a quantity indicating the inactivity time of the friction braking system **FBS** and, subsequently, to compare this quantity with a first intervention threshold indicating, in turn, an allowed maximum inactivity time.

The inactivity time, also depending on environmental conditions on the outside of the motor vehicle **MV** (for example humidity and temperature), indicates the possible formation of layers of oxide **OX** on the aforesaid surfaces **FPS**. The aforesaid blocks of braking material **FP**, indeed, are made of a friction materials, which, as time goes by without being used, naturally tend to oxidize.

The layers of oxide **OX** cause a decrease in the coefficient of friction between the surfaces **FDP**, **FPS**, thus causing a temporary loss of efficiency of the friction braking system **FBS**. A similar reduction of the friction coefficient could also be caused by possible condensate, which, as the inactivity time increases, can build up on the aforesaid surfaces **FDS**, **FPS**.

For this reason, when the value indicating the inactivity of the friction braking system **FBS** exceeds the first intervention threshold, the electronic control unit **ECU** replies to a successive braking control by activating the friction braking system **FBS,** regardless of the deceleration value determined in response to the braking control.

During the braking action, the contact and the rubbing between the surfaces **FDS**, **FPS** lead to the disaggregation and thinning of the layers of oxide **OX** and to the removal of the possible condensate. By so doing, with one or more braking actions, the efficiency of the friction braking system **FBS** is completely restored. Conveniently, the aforesaid intervention threshold, which indicates an allowed maximum inactivity time, is a constant value stored in the electronic control unit **ECU**, namely - more conveniently - it is a value that is determined each time by the electronic control unit **ECU** based on signals relating to environmental quantities (e.g. temperature and humidity).

For example, in dry climate conditions (i.e. high temperatures and reduced humidity), the electronic control unit **ECU** sets an intervention threshold that is much greater than the one that it would have set in humid climate conditions, in which the layers of oxide **OX** build up more easily.

Preferably, the electronic control unit **ECU** directly determines the time elapsed since the last activation of the friction braking system **FBS**, for example by means of an inner clock.

According to other advantageous embodiments of the present invention, the electronic control unit **ECU**, rather than directly determining an inactivity time and comparing it with an allowed maximum inactivity time, determines other quantities, which indicate anyway the inactivity time.

For example, the electronic control unit **ECU** determines the number of consecutive activations of the regenerative braking system **RBS**. Indeed, the number of consecutive activations of the regenerative braking system **RBS** is evidently correlated with the inactivity time of the friction braking system **FBS.**

According to another example, the electronic control unit **ECU** determines the number of kilometres covered by the motor vehicle **MV** without braking actions of the friction braking system **FBS.**

Alternatively, the electronic control unit **ECU** processes signals relating to the operating conditions of the braking assemblies **BA** and indicating the time of inactivity thereof.

In particular, it is possible to detect the temperature at the braking assemblies **BA**. For example, low values of said temperature and/or a decrease thereof, basically indicate a scarce use of the friction braking system **FBS.**

According to another alternative, the electronic control unit **ECU** evaluates the time of inactivity of the friction braking system **FBS** starting from a combination of some or all above-mentioned quantities.

According to a preferred aspect of the present invention, when the value indicating the inactivity time of the friction braking system **FBS** reaches the first intervention threshold, the electronic control unit **ECU** starts a restoring cycle to restore the efficiency of the friction braking system **FBS,** namely it activates, on different occasions, in response to respective braking controls, the friction braking system **FBS,** even though the aforesaid base selection criterion would have caused the electronic control unit **ECU** to activate the regenerative braking system **RBS.**

As a matter of fact, the more braking actions are carried out by means of the friction braking system **FBS** the more the layers of oxide **OX** become thinner, with a consequent restoration of the efficiency of the friction braking system **FBS.**

For example, these braking actions are repeated for a predetermined number of times, which is stored in the electronic control unit **ECU**. Conveniently, this number is predetermined during the designing of the motor vehicle **MV**, estimating in advance the quantity of oxide removed with each braking action, for example based on the material and/or on the dimensions of the blocks of braking material **FP**.

Since the removed quantity of oxide also depends on the braking intensity, the electronic control unit **ECU** is advantageously configured to adjust the number of braking actions to be carried out by means of the restoring cycle based on the extent of the braking control, namely based on the deceleration values chosen by the driver through the operation of the control member **BP.**

In particular, the number of braking actions actually carried out is reduced with respect to the stored predetermined number if one or more of these deceleration values is high, to such an extent that the corresponding braking forces on the surfaces **FPS**, **FDS** lead to the removal of a large quantity of oxide.

For example, the electronic control unit **ECU** has stored at least one reference value representing a deceleration limit, for example 0.4 g, beyond which the electronic control unit **ECU** reduces, possibly up to one, the number of braking actions of the restoring cycle.

More in general, it is evident that the electronic control unit **ECU** can reduce the number of braking actions with respect to the stored predetermined number based on a predetermined strategy, which is stored in the electronic control unit **ECU**.

With reference to Figure 1, the electronic control unit **ECU** determines the level of charge of the battery **BY**. The electronic control unit **ECU** then compares said level of charge with a charge threshold stored in the electronic control unit **ECU**. The charge threshold defines a level of charge that is sufficient to fulfil the energy requests of the utilities of the motor vehicle **MV** or it defines a maximum level of charge.

In this way, the electronic control unit **ECU** identifies the need - or lack thereof - to charge the battery **BY** through the activation of the regenerative braking system **RBS**.

In particular, when the actual level of charge is smaller than the charge threshold, the switch **ES** is controlled by the electronic control unit **ECU** so that the electric machine **ECM** is connected to the battery **BY** and supplies power to the latter, when it works as an electric current generator.

If, on the other hand, the actual level of charge is greater than the charge threshold, the switch **ES** is controlled by the electronic control unit **ECU** so that the electric machine **ECM** is connected to the resistor **R**, so that the electric current generated by the regenerative braking system **RBS** is dissipated.

Instead of dissipating electrical energy, according to a preferred aspect of the present invention, when the battery **BY** reaches a level of charge that is at least equal to the stored charge threshold, the electronic control unit **ECU** controls the friction braking system **FBS** regardless of the aforesaid base selection criterion and regardless of a possible inactivity of the friction braking system **FBS**.

Alternatively, the electronic control unit **ECU** takes into account the inactivity of the friction braking system **FBS** whilst controlling the latter, when the level of charge of the battery **BY** reaches the stored charge threshold, so as to find a compromise between moderation in the use of the blocks of braking material **FP** and storage of electrical energy. To this aim, the electronic control unit **ECU** controls the friction braking system **FBS** if the value indicating the inactivity of the friction braking system **FBS** is getting close to the first intervention threshold, namely if it has reached a second predetermined intervention threshold, which is also stored and is smaller than the first one.

To sum up, during the driving of the motor vehicle **MV**, when the drivers wants to brake, he/she operates the control member **BP**.

The group of sensors **SENS1** detects the way in which the control member **BP** was operated and, consequently, sends braking signals to the electronic control unit **ECU**. The latter, based on said signals, estimates the deceleration value desired by the driver and, depending on the base selection criterion, chooses which system to activate between the friction braking system **FBS** and the regenerative braking system **RBS.**

At the same time, the electronic control unit **ECU** monitors the quantity indicating the time elapsed since the last activation of the friction braking system **FBS** and, preferably, also the level of charge of the batter **BY**. Based on the result of the comparison with the corresponding stored thresholds, the electronic control unit **ECU** establishes whether a restoring cycle needs to be started, thus bypassing the base selection criterion.

During the restoring cycle, the repeated contact between the surfaces **FPS**, **FDS** causes the removal of possible layers of oxide **OX** formed during the inactivty time of the friction braking system **FBS**, which - hence - goes back to having an optimal efficiency.

In particular, if the battery **BY** is not completely charged or, anyway, its level of charge is not sufficient to ensure the complete autonomy of electric utilities, the restoring cycle starts only after the inactivity of the system **FBS** has exceeded the first intervention threshold. Vice versa, the cycle of braking actions carried out with the system **FBS** can be advanced (for example, upon reaching the second intervention threshold).

Owing to the above, the advantages that can be obtained with the present invention are evident.

In particular, the present invention offers an improvement in the braking performances of the braking system of the motor vehicle **MV**.

This improvement is due to the use of the electronic control unit **ECU**, which, after a given inactivity time of the friction braking system **FBS**, controls a braking action or the beginning of a cycle of braking actions by means of the friction braking system **FBS,** so that the efficiency of the system can be completely restored.

In particular, the activation of the friction braking system **FBS** removes the layer of oxide formed on the blocks of braking material **FP** due to the lack of use.

Thanks to the possibility of advancing the beginning of the braking cycle when the battery **BY** is sufficiently charged, the aforesaid performance improvement can take place, limiting at the same time a possible waste of electrical energy generated by the regenerative braking system **RBS.**

Owing to the above, it is evident that the braking mode selection system **ABMS** described above can be subjected to changes and variants, without for this reason going beyond the scope of protection set forth in the appended claims.

For example, the braking actions carried out during the restoring cycle by means of the friction braking system **FBS** could alternate with braking actions carried out by means of the regenerative braking system **RBS.**

Similarly, the friction braking system **FBS** and the regenerative braking system **RBS** could be activated simultaneously with a division of the braking established according to control logics stored in the electronic control unit **ECU.**

## Claims

1. A braking mode selection system (**ABMS**) in a motor vehicle (**MV**) comprising a battery (**BY**), a control member (**BP**) to generate a braking control, and a braking system (**BS**) comprising a friction braking system (**FBS**) and a regenerative braking system (**RBS**), each associated with at least two wheels (**FW**,**RW**) of the motor vehicle (**MV**); the friction braking system (**FBS**) comprising a pair of friction surfaces (**FPS**, **FDS**), which are adapted, during a braking action, to cooperate with one another through friction; and the regenerative braking system (**RBS**) comprising an electric machine (**ECM**), which is suitable to work as a generator to charge said battery (**BY**);
the braking mode selection system comprising an electronic control unit (**ECU**), which is configured so as to receive said braking control and to activate, in response to the braking control, the friction braking system (**FBS**) and/or the regenerative braking system (**RBS**) depending on a base selection criterion; **characterized in that** the electronic control unit (**ECU**) is further configured so as to:
- determine the value of a quantity indicating the inactivity of the friction braking system (**FBS**);
- compare the value of said quantity with a first threshold;
- activate at least once, in response to the braking control, the friction braking system (**FBS**), when the value of said quantity reaches the first threshold, regardless of said base selection criterion.

2. A braking mode selection system according to claim 1, **characterized in that** the electronic control unit (**ECU**) is configured so as to carry out a restoring cycle comprising at least two activations of the friction braking system (**FBS**), in response to respective braking controls, when the value of said quantity reaches the first threshold, regardless of said base selection criterion.

3. A braking mode selection system according to claim 2, **characterized in that** the electronic control unit (**ECU**) is configured so as to determine the number of activations included in the restoring cycle based on the extent of said braking controls.

4. A braking mode selection system according to any one of preceding claims, **characterized in that** said quantity is defined by the time elapsed since the last activation of the friction braking system (**FBS**).

5. A braking mode selection system according to any one of claims from 1 to 3, **characterized in that** said quantity comprises the number of braking actions carried out by means of the regenerative braking system (**RBS**) since the last activation of the friction braking system (**FBS**).

6. A braking mode selection system according to any one of claims from 1 to 3, **characterized in that** said quantity comprises the space covered by the motor vehicle since the last activation of the friction braking system (**FBS**).

7. A braking mode selection system according to any one of claims from 1 to 3, **characterized in that** said quantity comprises the temperature of at least one component of the friction braking system (**FBS**).

8. A braking mode selection system according to any one of preceding claims, **characterized in that** said first threshold is determined based on signals relating to environmental quantities.

9. A braking mode selection system according to any one of preceding claims, **characterized in that** the electronic control unit (**ECU**) is configured so as to:
- determine a level of charge of the battery (**BY**);
- compare the level of charge with a charge threshold; and
- activate at least once, in response to the braking control, the friction braking system (**FBS**), when the level of charge is greater than the charge threshold, regardless of said base selection criterion.

10. A braking mode selection system according to claim 9, **characterized in that** the electronic control unit (**ECU**) is configured so as to:
- comparing the value of said quantity with a second threshold, which is smaller than said first threshold; and
- activate at least once, in response to the braking control, the friction braking system (**FBS**), when the level of charge is greater than the charge threshold and the value of said quantity is between said first and second threshold, regardless of said base selection criterion.
